# EUROPEAN PATENT SPECIFICATION

(11) **EP 1 117 529 B1**
(45) Date of publication and mention of the grant of the patent: **25.11.2009**
(21) Application number: 99948355.5
(22) Date of filing: 23.09.1999
(51) Int. Cl.: C09J 133/06, C09J 139/04, C09J 133/02, C09J 135/00, C09J 133/14

(54) **Adhesives with improved properties on a riveted surface**
Klebstoffe mit verbesserten Eigenschaften auf einer vernieteten Oberfläche
Adhésifs ayant des propriétés améliorées sur une surface rivetée

(30) Priority: 23.09.1998 US 101538 P
(43) Date of publication of application: 25.07.2001
(73) Proprietor: AVERY DENNISON CORPORATION, Pasadena, CA 91103 (US)
(72) Inventor: IYER, Pradeep, Hacienda Heights, CA 91745 (US); LAMB, Gerhild, Upland, CA 91784 (US); MALLYA, Prakash, Sierra Madre, CA 91024 (US)
(74) Representative: Müller-Boré & Partner Patentanwälte
(86) International application number: PCT/US1999/021789
(87) International publication number: WO 2000/016976

(56) References cited:
- EP-A- 0 342 811
- EP-A- 0 615 983
- US-A- 4 181 752
- US-A- 4 370 380
- US-A- 4 510 197
- US-A- 4 605 592
- US-A- 4 812 541
- US-A- 4 988 742

## Description

This invention relates to a pressure sensitive adhesive composition for laminates that have superior adhesion properties when applied to curved and uneven surfaces.

This invention concerns a pressure sensitive adhesive composition for laminates (comprising typically a facestock, adhesive and release coated liner) that are used to primarily make signs. The sign may be used on the side of vehicles for the purposes of advertisement, decoration, and/or information. The desirable functional features of such laminates, include the ability to readily hand-peel the adhesive containing film off from the release liner and apply on to a variety of substrates during hot or cold seasons; conform well over rivets and corrugation (to look as though the graphics containing laminate signs were painted); allow for the ability to reposition the laminate by minimizing initial adhesion to substrate; minimize or eliminate trapping of air bubbles during application to substrates; offer excellent compatibility with various printing techniques as well as good reception to various type of printing inks; tolerate a wide variation in outdoor weather conditions such as rain, solar irradiation, winter as well as summer temperatures; remove cleanly when desired from the side of these vehicles without leaving adhesive residue or film breaking due to becoming brittle and offer sufficient adhesion to various metal and painted and plastic substrates over a wide range of temperatures spanning from summer to winter months. Obtaining all the desirable product attributes successfully within a laminate is, therefore, quite a challenge that requires the skillful combination of facestock, adhesive and release liner with optimum requisite properties.

US 3728148 deals with a PSA for electrical tapes and teaches the use of an alkyl acrylate ester with 10-30% of a N-vinyl lactam and a modifying comonomer.

US 4,364,972 deals with a PSA containing an alkyl acrylate ester and 15-50 parts by weight of N-vinyl pyrrolidone. The adhesive has high adhesion and cohesion and adheres strongly to paints, rubber or plastic foam. The application contemplated is to adhere plastic molding strips to autos.

US 4370380 deals with a blend of two polymers. First polymer is a water soluble polymer of a vinyl lactam with 1-80 mole% of a comonomer. Second polymer is a tacky water insoluble copolymer of an acrylate ester with 1-12% by weight of an acidic comonomer. The resulting pressure-sensitive adhesive has moisture permeability and is used for skin adhesion.
US 4510197 deals with a water vapor permeable PSA comprising from about 79-89% of n-butyl acrylate, from about 10-20% of a hydrophilic n-vinyl lactam and from about 1-5% of an acid containing comonomer.
US 4818610 deals with a tape having a plurality of layers which cannot be delaminated due to migration polymer chains of the contiguous layers. A PSA of an alkyl acrylate with a minor proportion of polar copolymerizable monomers selected from n-vinyl pyrrolidinone and acrylic acid is disclosed.

US 4968562 deals with a hollow, inherently tacky removable microsphere PSA containing nitrogen and acid free.

US 4,988,742 deals with a PSA terpolymer comprising a) from 60-95 parts of a photopolymerized polymer of monomers containing i) 60-96 parts alkyl acrylate, ii) 2 to 15 parts of a strongly polar copolymerizable monomer, iii) 2 to 25 parts of a strongly polar and moderately polar monomer, b) 40 to 5 parts of hydrogenated rosin ester tackifier and c) 0.01 to 1 parts of a photoinitiator. These tackified polymers are alleged to have lower Tg than polymers of the same composition without tackifier. These polymers are alleged to have significantly higher shear and adhesion to lower energy substrates.

EP-B-303430 deals with a PSA comprising 50-95 parts of UV polymerized polymer of i) acrylate and ii) 2-15 parts of a strongly polar comonomer and iii) 5-30 parts of moderately polar monomer such as N-vinyl pyrrolidinone, N-vinyl caprolactam, further comprising 0.01 -1 wt.% crosslinker and b) 5-50 parts of t-butyl styrene tackifier.

EP-A-324242 deals with a foam like PSA tape where the PSA comprises of a) polymer of 70-100 parts of acrylate and b) 30-0 parts of a moderately polar comonomer selected from NVP, N-vinyl caprolactam and c) 0.01 to 1 part of hexanediol diacrylate, amino formaldehyde or trihalotriazine crosslinking agent.

EP-A-342811 deals with a PSA comprising 60-88 parts of an alkyl acrylate, 2-30 parts of a polar nitrogen containing vinyl monomer, and 0-12 parts of a vinyl carboxylic acid, said copolymer being intimately blended with 2-35% of plasticizer. Excellent shear adhesion retention after prolonged contact with plasticized vinyl substrate is claimed.

EP-A-0 615 983 describes a pressure-sensitive adhesive composition comprising a crosslinked copolymer comprising certain (meth)acrylate esters, certain nitrogen containing basic monomers copolymerizable therewith, optional copolymerizable acidic monomer, and crosslinker.

US-patent 4,605,592 describes a multilayer decorative article having in order an ink-receptive vinyl film layer, a plasticizer barrier layer, and a pressure-sensitive adhesive layer, the adhesive layer being adapted to maintain adhesion to highly plasticized vinyl substrates.

US-patent 4,181,752 describes a process for the preparation of a normally-tacky pressure-sensitive adhesive which comprises subjecting a solventless radiation-sensitive acrylate-containing polymerizable mass to radiation in the near UV region, at a rate of from about 0.1 to 7 milliwatts per square centimeter of the mass exposed.

The present invention is directed towards pressure-sensitive adhesive compositions that exhibit excellent rivet performance (minimizing the tendency towards tenting due to uneven surface features like rivet heads, contours and corrugations) and outstanding removal characteristics (peels off cleanly without leaving any residue on the substrate). Two key monomers are used in combination in the pressure-sensitive adhesives of this invention to impart unique properties to the resulting polymers. The monomers are at least one acid containing monomer in combination with at least one nitrogen containing monomer, such as a N-vinyl lactam.

The pressure sensitive adhesives provide improved removability of the laminate from the substrate even after aging for extended time periods. The cohesive integrity of the laminate is reflected in the ability to peel it off cleanly from the substrate . Superior performance requires the presence of both acid and nitrogen containing monomers. In one embodiment, superior performance is obtained with additionally using the appropriate cast vinyl facestock.

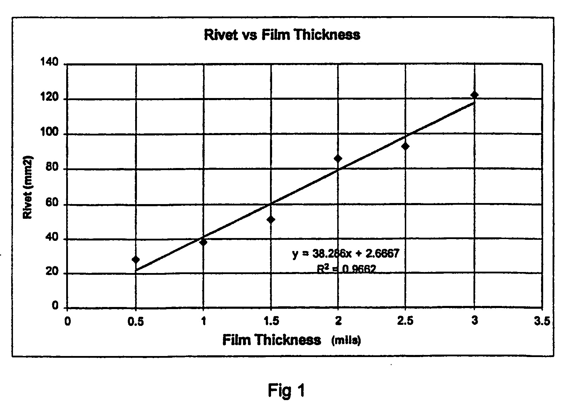

Fig. 1 graphically shows the relationship of film thickness and rivet performance.

FIG. 2 graphically shows the effect of N-vinyl pyrrolidone monomer on the Rivet tenting performance (measured in mm²) before and after thermal aging at 60°C/4 days where small values being preferred. The corresponding test method is described later within the text.

As described above the present invention relates to adhesives, adhesive blends and laminates prepared therefrom. One aspect of the present invention provides a laminate that can be hand applied to sides of vehicels that often contain uneven surfaces like rivets or corrugations. The present invention relates to a pressure sensitive adhesive composition comprising a blend of (1) from 5 % to 85 % by weight of a first pressure sensitive adhesive comprising (a) a major amount of at least one acrylate or methacrylate ester containing from 4 to 24 carbon atoms in the ester group, (b) from 8% to 30% by weight of at least one nitrogen containing monomer, (c) from 0.5% to 15% by weight of at least one unsaturated carboxylic acid, and optionally (d) at least one glycidyl monomer in an amount up to 3 % by weight as a cross-linkable monomer; and (2) from 15 % to 95 % by weight of a second pressure sensitive adhesive comprising (a) a major amount of at least one acrylate or methacrylate ester, (b) from 0.5% to 10% by weight of at least one nitrogen containing monomer, (c) from 0.5 % to 15 % by weight of at least one unsaturated carboxylic acid, and (d) at least one glycidyl monomer as a cross-linkable monomer; wherein the nitrogen containing monomer content of the first pressure sensitive adhesive is greater than that of the second pressure sensitive adhesive. The adhesives are co-polymers of an acrylate or methacrylate ester, a nitrogen containing monomer, an unsaturated carboxylic acid, and optionally a monomer containing at least one cross-linkable site. The polymers generally have a glass transition temperature of less than 10° C, or preferably less than 0° C, or most preferably less than -15° C. The polymers typically have a weight average molecular weight of at least 200,000, preferably from 200,000 to 700,000. Here and elsewehere in the specification and claims the range and ratio limits may be combined. The weight average molecular weight was determined by size exclusion chromatography using polystyrene for calibration.

Polymers of the instant invention may be synthesized by solution, emulsion and bulk polymerization. It is presently preferred that they be formed by solution polymerization. Polymers may be cross-linked to the desired extent, prior to use, using heat, ionic additives, catalysts and actinic or electron beam radiation.

The acrylic or methacrylic ester polymers may be prepared by polymerizing an alkyl or hydroxyalkyl acrylate or methacrylate ester, one or more of the above nitrogen containing monomers and a carboxylic acid.

The acrylate or methacrylate esters include those having from 4 to 16 carbon atoms in the alkyl group. The alkyl acrylate and methacrylate esters include without limitation 2-ethyl hexyl acrylate, isooctyl acrylate, butyl acrylate, sec-butyl acrylate, methyl butyl acrylate, 4-methyl-2-pentyl acrylate, isodecyl methacrylate and their hydroxy substituted analogs, and mixtures thereof. Isooctyl acrylate and 2-ethyl hexyl acrylate are particularly preferred. The acrylate ester or methacrylate esters are generally present in a major amount, e.g. greater than 50% by weight. Typically the acrylate or methacrylate ester is present in an amount from 55% to 90%, or from 60% to 85%, or from 65% to 80% by weight. Here and elsewhere in the specification and claims the range and ratio limits may be combined.

The nitrogen containing monomers include N-vinyl lactams. Examples of useful nitrogen containing monomers are N-vinyl pyrrolidone, N-vinyl caprolactam, 1-vinyl-2-piperidone and 1-vinyl-5-methyl-2-pyrrolidone. N-vinyl pyrrolidone is preferred. The level of nitrogen containing monomer in the first pressure sensitive adhesive is from 8% to 30%, preferably from 9% to 8%, or from 10% to 14% by weight.

According to the present invention, the first pressure sensitive adhesive is prepared in the presence of at least one unsaturated carboxylic acid. The unsaturated carboxylic acids include acrylic acid, methacrylic acid, fumaric acid, maleic acid or anhydride, allyl acid, or mixtures of two or more thereof. The unsaturated carboxylic acid is present in an amount from 0.5% to 15%, preferably from 2% to 12%, or from 4% to 10% by weight.

Optionally, the first pressure sensitive adhesive is prepared with at least one glycidyl monomer. The glycidyl monomer include epoxy acrylate or methacrylate esters, and glycidyl allyl esters. The glycidyl monomers are present in an amount from 0% to 3%, preferably from 0.05% to about 2%, or from 0.3% to 2%, or from 0.08% to 1% by weight. In one embodiment, the glycidyl monomer is present most preferably in an amount of less than 0.5%, or less than 0.3%, or preferably less than 0.2% by weight, In this embodiment, the glycidyl monomer is present at a level of at least 0.01% by weight.

In one embodiment, the polymers include at least one alkyl acrylate and methacrylate ester containing less than 4 carbon atoms in the alkyl group. Examples of these monomers include methyl acrylate, ethyl acrylate, methyl methacrylate and ethyl methacrylate. Methyl acrylate is particularly preferred. These monomers are present in an amount from 0% to 35%, or from 5% to 30%, or from 10% to 25% by weight.

The polymers may include other co-polymerizable monomers. Typically these monomers are present in an amount from 0% to 33%, or from 1% to 20%, or from 3% to 15% by weight. These other monomers are selected to provide the desired glass transition temperature for the polymer. Other monomers include polystyryl ethyl methacrylate, acetoacetoxy ethyl methacrylate, alpha olefins (e.g. C₂₋₈ alphaolefins), such as ethylene, propylene and butylene, and vinyl esters of alkanoic acids containing more than three carbon atoms.

The first pressure sensitive adhesives exhibit good adhesion to high-energy surfaces such as stainless steel, aluminum and painted panels. These adhesives and blends therewith help retain the adhesive performance e.g. required for superior performance over rivet and corrugated surfaces, without compromising either the cohesive strength (important for long term removability properties) or cold temperature properties. The adhesive composition is particularly well suited for use with films like PVC that are known to often contain migratory additives, such as plasticizers, which are capable of compromising adhesive performances. Blends of appropriate adhesive formulations particularly help overcome the cold temperature deficiency of high NVP polymers while still maintaining good aged Rivet performance and long term removability characteristics.

In one embodiment, the first pressure-sensitive adhesive polymers are prepared by co-polymerizing a mixture of monomers comprising from 55% to 85% by weight of an alkyl acrylate and/or methacrylate ester containing 4 to 12 carbon atoms in the alkyl group; from 0 to 1% by weight of a glycidyl monomer; from 10% to 30% by weight, preferably from 10% to 15% by weight of a nitrogen monomer; from 0.5% to 15% by weight, preferably from 5% to 15% by weight of an unsaturated carboxylic acid, most preferably from 3% to 8% by weight; from 0 to 30% by weight of an alkyl acrylate and/or methacrylate ester containing less than 4 carbon atoms in the alkyl group, most preferably from 12% to 22% by weight, and optionally from 0 to 33% by weight of one or more other comonomers to provide a balance of desirable polymer properties such as glass transition temperature.

The copolymers may be synthesized using solution, emulsion, and bulk polymerization techniques. It is presently preferred to prepare the copolymers in solution using a mixture of solvents. The present preferred solution polymerization involves the use of heptane, hexane, ethyl acetate, acetone, or blends thereof, such as blends of (1) ethyl acetate and hexane, (2) ethyl acetate and heptane, or (3) ethyl acetate and acetone. The ratio of solvents is adjusted to provide a reflux temperature from 68°C. to 78° C. The solids content during polymerization may typically range from 30% to 60% in order to achieve the desired weight average molecular weight, and yet achieve viscosities that are manageable in the reactor. The reaction occurs in the presence of free-radical initiators, preferably of the azo type, for example, 2,2'-azobis (isobutyronitrile). The polymers formed are solvent soluble polymers. In one embodiment; the glycidyl monomer is limited to 3% by weight of the total monomers to avoid the possibility of cross-linking, by opening of the oxirane group, during the polymerization process Polymers can, as desired, be post-polymerization cross-linked using heat, catalysts, actinic or electron beam radiation and the like. The adhesive properties can, further be, manipulated and modified by additions of additives such as tackifiers, plasticizers, etc.

The following examples relate to co-polymers which are not within the scope of the present invention. Unless otherwise indicated here or throughout the specification and claims, the range and ratio limits are by weight, the temperature is room temperature in degrees Celsius and the pressure is atmospheric pressure.

### EXAMPLE A (Reference Example)

A monomer mixture is made up by mixing 216.3 g. of 2-ethyl hexyl acrylate, 40.76 g of methyl acrylate, 0.32 g. of glycidyl methacrylate, 38.04 g of N-vinyl pyrrolidone and 22.05 g of acrylic acid. A portion of (79.37 g) of this mixture is introduced to a 2-liter reactor equipped with a pitched turbine agitator, a reflux condenser and a thermistat. Also, 34.4 g. of ethyl acetate and 39.4 g of hexane are added to the reactor. The contents of the reactor are heated to reflux and 0.12 g of Vazo 64, (manufactured and sold by duPont) in 5.0 g of ethyl acetate is added. After vigorous reflux started in a short time and the contents of the reactor are held for 5 minutes. At this time, the remaining monomers are mixed with 268.6 g. of ethyl acetate, 37.6 g. of hexane and 0.35 g. of Vazo 64 and are added as a single feed mixture over 3.5 hrs. All through the feed, temperature is maintained to keep reactor contents under reflux. One hour after end of feed, 0.17 g. Vazo 64 is added in 5 g. ethyl acetate and temperature is maintained for an additional hour. The percentage of solids content at the end of reaction is 47% and the viscosity is 8680 mPa.s (cps) using #4@20°C on a Brookfield viscometer.

### Example B (Reference Example)

A pressure sensitive adhesive is prepared as described in Example A except isooctyl acrylate is used in place of 2-ethylhexyl acrylate.

### EXAMPLE C (Reference Example)

A monomer mixture is made up by mixing 216.3 g. of 2-ethyl hexyl acrylate, 40.8 g of methyl acrylate, 0.13g. of glycidyl methacrylate, 38 g of N-vinyl pyrrolidone and 22.1 g of acrylic acid. A portion of (66 g) of this mixture is introduced to a 2-liter reactor equipped with a pitched turbine agitator, a reflux condenser and a thermistat. Also, 30 g. of ethyl acetate and 20 g of heptane, 5g of methanol, 23.4 g of acetone are added to the reactor. The contents of the reactor are heated to reflux and 0.12 g of Vazo 64 (manufactured and sold by duPont) in 5.0 g of ethyl acetate is added. After vigorous reflux started in a short time and the contents of the reactor are held for 5 minutes. At this time, the remaining monomers are mixed with 257.3 g. of ethyl acetate, 36 g. of heptane and 0.35 g. of Vazo 64 and are added as a single feed mixture over 3.5 hrs. All through the feed, temperature is maintained to keep reactor contents under reflux. One hour after end of feed, 0.17 g. Vazo 64 is added in 5 g. ethyl acetate and temperature is maintained for an additional hour. The percentage of solids content at the end of reaction is 46% and the viscosity is 3025 mPa.s (cps) using #4@20°C on a Brookfield viscometer (@30% solids).

### Example D (Reference Example)

A monomer mixture is made up by mixing 216.3 g. of 2-ethyl hexyl acrylate, 40.8 g of methyl acrylate, 38 g of N-vinyl pyrrolidone and 22.1 g of acrylic acid. A portion of (66 g) of this mixture is introduced to a 2-liter reactor equipped with a pitched turbine agitator, a reflux condenser and a thermistat. Also, 30 g. of ethyl acetate and 20 g of heptane, 5g of methanol, 23.4 g of acetone are added to the reactor. The contents of the reactor are heated to reflux and 0.12 g of Vazo 64 (manufactured and sold by duPont) in 5.0 g of ethyl acetate is added. After vigorous reflux started in a short time and the contents of the reactor are held for 5 minutes. At this time, the remaining monomers are mixed with 253.7 g. of ethyl acetate, 36 g. of heptane and 0.35 g. of Vazo 64 and are added as a single feed mixture over 3.5 hrs. All through the feed, temperature is maintained to keep reactor contents under reflux. One hour after end of feed, 0.17 g. Vazo 64 is added in 5 g. ethyl acetate and temperature is maintained for an additional hour. The percentage of solids content at the end of reaction is 46% and the viscosity is 1100 mPa.s (cps) using #4@20°C on a Brookfield viscometer(@30% solids).

The following table contains further reference examples of the polymers of the present invention. The following examples follow the similar procedure of Example A. The amount of material is parts by weight. In the table, NVP refers to N-vinyl-pyrrolidone, MeA refers to methyl acrylate, GMA refers to glycidyl methacrylate, AA refers to acrylic acid, and 2-EHA refers to 2-ethylhexyl acrylate.

| Example | NVP | MeA | GMA | AA | 2-EHA |
|---|---|---|---|---|---|
| E | 30 | 0 | 0 | 3.0 | 67.0 |
| | | | | | |
| F | 12 | 12.8 | 0.1 | 6.9 | 68.2 |
| G | 12 | 12.9 | 0 | 6.9 | 68.2 |
| H | 12 | 0 | 0.1 | 6.9 | 81.0 |
| l | 12 | 12.6 | 0.3 | 6.9 | 68.2 |
| J | 12 | 0 | 0.3 | 6.9 | 80.8 |
| K | 12 | 4 | 0.3 | 6.9 | 76.8 |
| L | 12 | 8 | 0.3 | 6.9 | 72.8 |
| M | 12 | 12.8 | 0.3 | 3.6 | 71.3 |
| N | 12 | 12.8 | 0.3 | 6.9 | 68.0 |
| | | | | | |
| O | 10 | 13.6 | 0.3 | 7.0 | 69.1 |
| P | 10 | 10 | 0.3 | 7.0 | 72.7 |
| Q | 10 | 12 | 0.3 | 7.0 | 70.7 |
| | | | | | |
| R | 7.9 | 16.6 | 0.3 | 7.0 | 68.2 |
| S | 7.9 | 16.6 | 0.3 | 6.9 | 68.3 |
| T | 7.9 | 16.9 | 0.1 | 6.9 | 68.2 |
| U | 7.9 | 12.8 | 0.3 | 7.0 | 72.0 |
| V | 8 | 12.8 | 0.3 | 3.6 | 75.3 |
| W¹ | 12 | 12.8 | 0 | 6.9 | 68.2 |

| | | | | | |
|---|---|---|---|---|---|
| 1) made as described in Example D. | | | | | |

According to the present invention the above pressure sensitive adhesives are used in combination with a second pressure sensitive adhesive, i.e. another acrylate or methacrylate pressure sensitive adhesive. In this embodiment, the first pressure sensitive adhesive will have a higher level of nitrogen containing monomers than the second pressure sensitive adhesive. The first adhesive has at least 8% by weight of a nitrogen containing monomer. The second pressure sensitive adhesive will contain less nitrogen containing monomer than the first adhesive, i.e. less than 10%, or less than 8% or less than 5%, or less than 4% nitrogen containing monomer. These adhesives may be prepared as described above except that for the level of nitrogen containing monomer.

In one embodiment, the pressure sensitive adhesive composition is a blend of (1) one or more of the above described pressure sensitive adhesives and (2) a second pressure sensitive adhesive comprising (a) a major amount of at least one acrylate or methacrylate ester, (b) from 0.5% to 10% by weight of at least one nitrogen containing monomer, (c) from 0.5% to 15% by weight of an unsaturated carboxylic acid and (d) at least one glycidyl monomer as a cross-linkable monomer. The amount of the first adhesive is from 5% to 85%, preferably from 15% to 75% or from 25% to 65% by weight of the blend. The second adhesive is present in an amount from 15% to 95%, preferably from 25% to 85%, or from 35% to 75% by weight. In one embodiment, the adhesives are used at a ratio of first to second adhesive of (0.5 - 1.5 : 1), or (0.75 - 1.3 : 1), or about (1 : 1).

The second pressure sensitive adhesive may be prepared by procedures similar to those described above and to those described in U. S Patent 4,812.541. The acrylate or methacrylate ester, nitrogen containing monomer, unsaturated carboxylic acid, cross-linkable monomer and optional ingredients, such as alkyl acrylate and methacrylate ester containing less than 4 carbon atoms in the alkyl group and co-polymerizable monomer are described above. The amounts of the ingredients unless specifically stated otherwise are the same as those described above for the first pressure sensitive adhesive.

In another embodiment, the pressure sensitive adhesive composition is a blend of (1) a pressure sensitive adhesive comprising (a) a major amount of at least one acrylate or methacrylate ester, (b) from 8% to 30% by weight of at least one nitrogen containing monomer and (c) from 0.5% to 15% by weight of an unsaturated carboxylic acid, and (2) a second pressure sensitive adhesive comprising (a) a major amount of at least one acrylate or methacrylate ester, (b) from 0.5% to 10% by weight of at least one nitrogen containing monomer, (c) from 0.5% to 15% by weight of at least one unsaturated carboxylic acid, and (d) at least one glycidyl monomer as a cross-linkable monomer. The first adhesive may include as additional ingredients at least one cross-linkable monomer, at least one alkyl acrylate and methacrylate ester containing less than 4 carbon atoms in the alkyl group or at least one co-polymerizable monomer. These ingredients and there amounts are given above.

Useful second pressure sensitive adhesives that are used with the first adhesives include those described in U.S. Patent 4,812,541. In another embodiment, the other adhesive may be a commercially available pressure sensitive adhesive such as Polytex 7000 or AS-3261 HS available from Avery Dennison Corporation.

When using the blends, the amount of the adhesives are selected to provide a nitrogen containing monomer content in the blend of preferably at least 6%, or at least 7%, or at least 8% by weight. The amount of the first adhesive is from 5% to 85%, preferably from 15% to 75% or from 25% to 65% by weight of the blend. The second adhesive is present in an amount from 15% to 95%, preferably from 25% to 85%, or from 35% to 75% by weight. In one embodiment, the adhesives are used at a ratio of first to second adhesive of (0.5 -1.5 : 1), or (0.75 - 1.3 : 1), or about (1 : 1).

The following Example relates to blends of the first and second adhesives. In the following examples the second adhesive (control adhesive) is Polytex 7000 and is similar to Example 1 of U.S. Patent 4,812,541, which has 2% N-vinyl pyrrolidone and 7% acrylic acid.

| Blend Example | POLYMER | CONTROL TO ADHESIVE |
|---|---|---|
| B1 | B | 50:50 |
| B2 | N | 50:50 |
| B3 | A | 50:50 |
| | | |
| B4 | G | 50:50 |
| B5 | L | 50:50 |
| B6 | A | 40:60 |
| | | |
| B7 | A | 60:40 |
| Blend Example | POLYMER | CONTROL TO ADHESIVE |
| B8 | F | 50:50 |
| | | |
| B9 | F | 30:70 |
| | | |
| B10 | E | 70:30 |
| B11 | N | 30:70 |
| B12 | F | 64:36 |
| | | |
| B13 | E | (80:20) |
| B14 | N | (64:36) |
| B15 | E | (90:10) |
| | | |
| B16 | E | (95:5) |
| | | |
| B17 | E | N |
| B18 | W | 50:50¹ |
| B19 | D | 60:40 |

| | | |
|---|---|---|
| 1) blended with AS 3261- HS instead of Polytex 7000 | | |

In one embodiment, the pressure sensitive adhesive contains a plasticizer. The plasticizer is a high-boiling solvent or softening agent, usually liquid. It is an ester made from an anhydride or acid and a suitable alcohol that usually has between 6 to 13 carbon atoms. The plasticizer may be an adipate, a phosphate, a benzoate, a phthalate ester, a polyalkylene oxide, a sulfonamide, and mixtures of two or more thereof. etc. The plasticizers include but are not limited to DOA plasticizer (Dioctyl adipate), TEG-EH plasticizer (Triethylene glycol di-2-ethylhexanoate), TOTM plasticizer (Trioctyl trimellitate), triacetin plasticizer (Glyceryl triacetate), TXIB plasticizer (2,2,4,-trimethyf-1,3-pentanediol diisobutyrate), DEP plasticizer (Diethyl phthalate), DOTP plasticizer (Dioctyl terephthalate), DMP plasticizer (Dimethyl phthalate), DOP plasticizer (Dioctyl phthalate), DBP plasticizer (Dibutyl phthalate), polyethylene oxide, toluenesulfonamide and dipropylene glycol benzoate.

The pressure sensitive adhesive may also contain a compatible tackifier. Tackifiers, are generally hydrocarbon resins, wood resins, rosins and rosin derivatives, which when present in concentrations ranging from 5 to 50 by weight of the total adhesive composition, more preferably from 10 to 20 by weight, impart pressure-sensitive adhesive characteristics to the elastomeric polymer adhesive formulation. It is contemplated that any tackifier known by those of skill in the art to be compatible with elastomeric polymer compositions may be used with the present embodiment of the invention. Examples of useful tackifier include Foral 85 & Hercolyn-D (rosin esters available from Hercules) and Nirez 2019 (terpene phenolic resin available from Arizona Chemical).

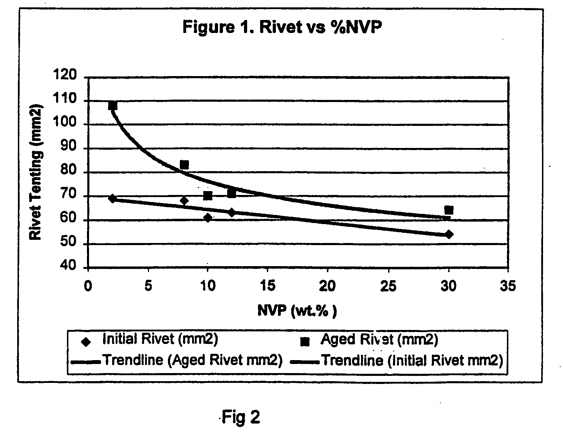

In addition to the tackifiers, other additives may be included in the PSAs to impart desired properties. Antioxidants also may be included on the adhesive compositions. Suitable antioxidants include Irgafos 168 and Irganox 565 available from Ciba-Geigy, Hawthorne, N.Y.
The above adhesive blend may be used in laminates having a facestock, such as a flexible vinyl film. The face stock is adhered to the pressure sensitive adhesive composition. The nature of the facestock plays a role in many of the performance attributes desired in such laminates. Cast vinyl facestocks with a film thickness of about 10 µm to about 200 µm, with approximately 50 µm thicknesses being most preferred. Thicker films worsen rivet tenting performance while thinner constructions are superior (see Figure 2 ) although physical handling of films much below 50 µm becomes more difficult and undesirable.

The Young's Modulus (measured following ASTM D 638M-93 guidelines using crosshead speeds of 100% strain/min) ranged from 620.5 bar to 12 548 bar 9,000 to 182,000 psi) for the cast 50 µm vinyl films studied with the most preferred range being 2068 bar - 6205 bar (30,000 -90,000 psi) with % strain at break to be >100% most preferably between 120 - 240%. While a large class of monomeric as well as polymeric plasticizers can be used to get the desired tensile film properties, the latter are more desirable due to their lower propensity for migration. Plasticizer migration can not only compromise adhesive properties but also result in increasing the film modulus (making it stiffer) thereby contributing to worsening rivet tent performance. The class of polymeric plasticizers suitable for optimum cast flexible vinyl films include but not limited to one or more of the following: polymeric/polyester adipate - EM-9776, polymeric/polyester azelates EM-9789 & EM-9790 (from Emery Corporation), polyester adipate - PLR-100 (from Huls America), and polyester sebacate - G-25, polyester adipate - G-54, polyester adipate - G-59 &, P-670, polyester sebacate -P-1070 (from C. P. Hall Corporation) and polyester adipate - Pallomal 656 (from BASF). The organosol for making the cast vinyl films typically used Hi-Sol 10, an aromatic petroleum distillate (available from Ashland Chemical Co), ethyl acetate or other suitable solvent mixtures. The BaZn heat stabilizer used was an organo barium zinc heat stabilizer, product name Mark 2181, (available from Witco Corp) although other related commercial can also be used. The UV absorber used was Cyasorb UV 531 (available from Cyanimid Corp). While the formulations additionally also could incorporate an proprietary epoxy heat stabilizer like ThermChek 909 (available from Ferro Corporation), studies indicate that this additive could be detrimental to rivet performance (see below).

**Table A Rivet Performance**

| **Vinyl/Adhesive** | **Initial Rivet (mm²)** | **Aged Rivet (mm²)** |
|---|---|---|
| | | |
| Vinyl A/ Control Adhesive | 59 | 173 |
| Vinyl B/ Control Adhesive | 63 | 121 |
| 900W/ B18+8%DOA | 94 | 116 |
| 900W/ B18+8%DOA + 0.15% AAA | 88 | 86 |

### Aged 60°C/6 days

Experimental Vinyl A = PVC resin Geon 198+ plasticizer G-59 + heat stabilizer Mark 2181 + UV stabilizer UV-531+ white pigment TiO₂ + Epoxy plasticizer Thermcheck 909
Experimental Vinyl B = PVC resin Geon 198+ plasticizer G-59 + heat stabilizer Mark 2181 + UV stabilizer UV-531+ white pigment TiO₂ 900W = Commercial white cast vinyl available from Avery Dennison Corporation

Those skilled in the art would recognize that process conditions like e.g oven temperatures and web speed also play an important role in obtaining the desired tensile properties.

The release liner is adhered to opposite surface of the pressure sensitive adhesive layer allowing for separating with optimum effort to expose the adhesive surface prior to application on a desired substrate . The low energy release is typically obtained using the appropriate polydimethylsilicone polymer coating available from either solvent based or solventless silicone coating that could be polymerized on the web using a variety of curing techniques including UV, thermal often catalyzed by metals like tin or platinum. Other desirable properties like adhesive repositionability and/or air egress may also be obtained by modifying the release surface. For example, roughening the release surface as taught by Mel Freedman (US 4,713,273) helps avoid problems of air entrapment during application of laminates to .. substrates. The facestock may also have a tie layer between the pressure sensitive adhesive and the facestock. One useful tie layer is polyamides such as Platamid available from Elf Atochem. In one embodiment, the facestock is any vinyl facestock used for signage, such as a polyvinylhalide polymers, which include polyvinyl chloride and polyvinylidene fluoride. These layers may have additives to improve their performance such as plasticizers, antioxidants and UV radiation absorbers. The pressure sensitive adhesive is also releasably adhered to a release liner such as a silicone liner. In one embodiment, the vinyl film has plasticizers. The vinyl film may also be composed of vinyl chloride copolymerized with acrylate, acrylic acid or blended with other polymers including polyurethane or rubber.

The adhesives are covalently cross linked by the action of the cross linkable monomer during polymerization. In one embodiment, the adhesives are cross-linked during post curing of the adhesive after coating. This can be achieved via heat, actinic, electron beam radiation or metal based ionic cross-linking between groups like carboxy and hydroxyl; and/or catalysts that induce reaction between functional groups such as epoxy, carboxy, hydroxy and amino, and/or multifunctional additives such as di-isocyanates. The cross linking agents include aluminum acetylacetonate (AAA), a polyamine, such ethylenepolyamines which include ethylenediamine, diethylenentriamine (DETA), triethylenediamine (TEDA), tetraethylenepentamine (TEPA) and multivalent metal complexes, such as titanium esters ( for example Tyzor available from Du Pont). These materials are usually added to the adhesive in solution with a chemical concentration of 3% to 15%, or from 5% to 10% weight. The crosslinking agent is typically used at a level from 0.05% to 1%, or from 0.075% to 0.75%, or from 0.1% to 0.5% by weight.

In the following tests, all test laminate samples were prepared using commercial 50 µm thick white vinyl 900 White films available from Avery Dennison's Graphics Division that were precoated with 2 - 7 µm thick tie/barrier layer Platamid layer. This tie layer provides the important function of robustly anchoring the adhesive to the vinyl contributing to superior long term removal characteristics. Appropriate amounts of adhesive(s) were intimately mixed with crosslinking solutions (e.g. 8-10% toluene solution of aluminum acetylacetonate-(AAA) and/or triethylenediamine- (TEDA). Unless stated otherwise, the crosslinker level used for optimum performance is 0.3% by weight. These adhesive solutions were diluted down appropriately to achieve good hand drawn coating on release liner stock using a "bull nose". The 32 g/m coat weights were drawn typically on 38.1 µm (1.5 mil) siliconized polyethylene terephthalate (PET) liner. The coatings were dried in an oven at 70°C for 10 minutes and 100°C for 5 minutes to ensure adequate crosslinking. The adhesive coated PET liner was then used to transfer coat on to the above mentioned vinyl facestock using a HL-100 laminator (made by Chemsultants, Fairfield, OH) operating at 2.76 bar (40 psi) pressure and a roll speed of 1.37 m/min (4.5 feet/min.)

Samples of the above adhesives were tested for rivet performance. Test laminate samples (prepared as described in the previous paragraph) approximately 7.62 x 15.2 cm (3 x 6 inch) in dimensions are applied over test panels painted with white, glossy, polyester paint (Polar White) and specially riveted with aluminum rivets. Application is done so as to minimize forming any wrinkles especially around these rivet heads, e.g. Brazier rivet heads. 11.4 mm (diameter) X 3.3 mm (height) X 7.62 mm (shaft diameter) (0.45" (diameter) X 0.13" (height) X 0.3" (shaft diameter)). Entrapped air is released with the use of pin pricks while a brush with hard bristles and plastic squeegee is used to get the best conformation of the film around the rivet. After 2 days, the panels are placed under a microscope (Olympus SZH zoom stereo microscope using 0.5x objective), the image is captured using a Pulnex CCD camera, and the image is analyzed using the Image Pro Plus (version 3.0, Media Cybernetics, Silver Spring, Maryland) software. This allowed for quantifying the tenting of the vinyl films around the test panel rivets accurately. The tent area is defined as the difference between the area enclosed by the two contact perimeters measured in the vicinity of the rivet head perimeter where the vinyl breaks contact with the rivet and the perimeter where the vinyl regains contact with the surrounding flat substrate.The rivet tenting is reported in square mm units. The average Rivet performance for 3M's Controltac 180-10 Plus™ was 87 mm² and was used as a reference standard

Fig. 2 shows how higher levels of NVP help retain good Rivet performance even after thermal aging. The alkyl acrylate fractions were adjusted to accommodate the changing levels of NVP within these polymer compositions. The level of acid and crosslinker was kept the same in all these compositions. The control test sample containing 2% NVP has been described in US Patent No. 4,812,541, issued to Mallya et al. and is commercially available from Avery Dennison as Polytex 7000 adhesive.

Interestingly, the cohesive strength increases without compromising peel adhesion as the NVP level increases. This is reflected in Table 1 which compares 180° peel adhesion and shear on stainless steel panels of two uncrosslinked adhesives, one which contains 2% and another with 12% N-vinyl pyrrolidone monomer. The test laminates were prepared as previously described by laminating to a coated 900W vinyl facestock.

**Table 1**

| **Sample ID/ (Adhesive) Unaged** | **%NVP** | **180° Peel ^{a} kg/m (lbs/in)** | **Shears ^{b} (mins)** |
|---|---|---|---|
| Control adhesive with no AAA crosslinker | 2 | 100 (5.6) | 40 |
| | | | |
| Example R | 8 | - | 269 |
| Example Q | 10 | - | 606 |
| Example F | 12 | 125 (7.0) | 1467 |

| | | | |
|---|---|---|---|
| ^{a}Peels were measured at room temperature using 30.48 cm/min (12 inches/minute) cross head speed after a 12 minutes dwell on stainless steel panels. ^{b}Shears measured at room temperature using 12.7 x 12.7 mm (½ x ½) inch) samples, 1 Kg weight using stainless steel panels. The failure mode in all were cohesive adhesive split. | | | |

The high shears measured with Example F adhesive reflects the high cohesive strength of these high NVP containing polymers. The high shear observed reflects the increased cohesive strength which, in turn, is believed to be instrumental towards imparting good long term removability performance. Unexpectedly, this is obtained without compromising the peel adhesion properties.

Poor tenting performance results when the acid level falls below an optimum level with respect to N-vinyl lactam content (see Table 2).

**Table 2**

| **Example** | **%NVP** | **%AA** | **Initial Rivet (mm²)** | **Aged (60-C/4d) Rivet (mm²)** |
|---|---|---|---|---|
| **Control Adhesive** | 2 | 7.0 | 69 | 108 |
| V | 8 | 3.6 | 105 | 115 |
| M | 12 | 3.6 | 97 | 68 |
| N | 12 | 6.9 | 40 | 69 |

These results are unexpected as a primary purpose in incorporating the N-vinyl lactam is to increase adhesion to vinyl films. The purpose of the acid group is normally to introduce functionality for inducing cross-linking after coating. While not bound by theory, it is presently believed that the carboxylic acid groups and N-vinyl pyrrolidone centers form acid-base links that impart high cohesive strength which, in turn, helps give superior Rivet performance. These acid-base interactions do not seem strong enough, however, to adversely degrade the adhesion properties of these polymers.

One application of the adhesives of the instant invention is the marking of e.g. truck panels with an adhesive coated vinyl film. The film is applied over a panel which may be a painted or unpainted aluminum panel fixed with aluminum rivets. The truck panel may also be vinyl. The ability of the adhesive to conform to the contour of the rivet and not lift appreciably after application is highly desirable. A tendency to lift away is known as "tenting" and the greater the separation from the rivet the more unsatisfactory is the adhesive.

### RIVET PERFORMANCE

The initial and aged rivet performance have been listed in Table 3. 3M's Controltac™ 180-10 Plus™ is a competitive product which is provided as a comparison.

**Table 3. Rivet Performance**

| **NVP Content (wt.%)** | **Initial Rivet (mm²)** | **Aged Rivet (mm²)** |
|---|---|---|
| | | |
| Control | 69 | 108 |
| 8 | 68 | 83 |
| 10 | 61 | 70 |
| 12 | 63 | 71 |
| 30 | 54 | 64 |
| 3M Controltac 180-10 Plus™ | 87 | - |

As can be seen in Table 3, while the Control adhesive shows excellent Rivet performance when "fresh", its performance degrades when the laminate (vinyl/adhesive construction) is thermally aged at 60°C/4-7 days. This degradation in performance is believed to largely stem from the migration of low molecular plasticizer from the vinyl into the adhesive. Besides compromising the adhesive performance, plasticizer losses from within the film also results in concomitantly increasing its modulus thus making it "stiffer" and less conformable around rivets. It was also observed that using high levels of crosslinker like (1%) degrades Rivet performance dramatically even prior to any thermal aging

The corresponding performance for the base adhesives are also shown in the Table 4 below for comparison.

**Table 4**

| **Description** | **NVP** | **MeA** | **GMA** | **Initial Rivet (mm2)** | **Aged Rivet (mm2)** |
|---|---|---|---|---|---|
| CONTROL ADHESIVE | 2 | 22.8 | 0.3 | 82 | 112 |
| N | 12 | 12.8 | 0.3 | 53 | 57 (a) |
| F | 12 | 12.8 | 0.1 | | 85 (b) |
| G | 12 | 12.9 | 0.0 | | 71 (b) |
| L | 12 | 8.0 | 0.3 | | 63 (b) |
| F | 12 | 12.8 | 0.1 | 46 | |
| E | 30 | 0.0 | 0.0 | 48 | |
| I | 12 | 12.6 | 0.3 | 49 | |
| R | 7.9 | 16.6 | 0.3 | 110 | 70 |
| E | 30 | 0.0 | 0.0 | 67 | 76 (a) |

| | | | | | |
|---|---|---|---|---|---|
| (a) Aged @ 60°C/6 days | | | | | |

The unique ability of these adhesives to retain rivet performance even after thermal aging is particularly important when the film facestock is composed of additive rich PVC films. It is well known that PVC film's unique properties are partially derived from the use of a number of additives (plasticizers, fillers or stabilizers) that are often present in substantial amounts. For example, the level and type of plasticizer used can be varied to provide complete control on the film's mechanical properties. Plasticizer migration is, however, a major drawback in PVC and is well known to compromise adhesive properties. While polymeric plasticizers, such as those used in examples described in this invention report, attempt to minimize such deleterious migrations, it is believed to nevertheless occur. While increasing the molecular weight of these polymeric plasticizers helps towards decreasing the migratory tendency, practical handling and manufacturing of good quality vinyl films becomes increasing more difficult, thus making this approach unsatisfactory.

### PLASTICIZER TOLERANCE

High NVP polymers tolerate plasticizer better than the 2% NVP adhesive like the Control adhesive. This is reflected in the data shown in the Table 5 below that contains Rivet performance data obtained after deliberately doping the adhesive with dioctylphthalate (DOA) "monomeric" plasticizer.

**Table 5**

| **Adhesive of Example** | **DOA Level (wt.%)** | **RIVET (INIT)** (mm²) | **RIVET (AGED)** (mm²) |
|---|---|---|---|
| I | 0 | 60 | 64 |
| I | 1 | 96 | 84 |
| I | 2 | 105 | 82 |
| B18¹ | 8 | 88 | 86 |
| | | | |
| Control Adhesive | 0 | 80 | 148 |
| Control Adhesive | 1 | 81 | 162 |
| Control Adhesive | 2 | 91 | 124 |
| | | | |

| | | | |
|---|---|---|---|
| 1) containing 0.15% AAA | | | |

Another unexpected consequence of doping these adhesives with plasticizers stemmed from the observation that the mechanical properties of the film were stabilized and could be kept from increasing even after thermal aging.

**Table 6**

| **Adhesive of Example** | **% DOA** | **Young's Modulus (psi) - Initial** | **Young's Modulus (psi) - After aging @ 60°C/4 days** |
|---|---|---|---|
| **Control adhesive** | **-** | **51,000** | **59,000** |
| **I** | **0** | **55,000** | **58,000** |
| **I** | **1** | **55,000** | **43,000** |
| **I** | **2** | **55,000** | **38,000** |

| | | | |
|---|---|---|---|
| 1 psi = 0.068948 bar. | | | |

This property is desirable and is expected to help improve Rivet performance as well as maintain film integrity especially by possible compensation of plasticizer loss expected to occur during the weather aging of the laminate.

### COLD TEMPERATURE PROPERTIES

The cold temperature properties are listed in Table 7. Higher levels of NVP (> 8%) in the adhesive formulations lead to poor "borderline" performance. Control adhesive and 8% NVP polymers, on the other hand, give good, robust cold temperature performance.

This test attempts to simulate the application of graphics application film at low temperature. The vinyl film side of the laminate is initially laminated with a protective, "premask" such as American Biltrite 6882 using the HL-100 laminator (Cheminstruments, Fairfield, OH) using 2.76 bar (40 psi) pressure and roll speed of 1.37 m/min (4.5 feet/min). The premask laminated samples were then conditioned at 4°C for at least 1 hour inside an environmental chamber/room. Working inside this regulated room, the samples were applied to PPG acrylic painted panels using 2 passes of 2.04 kg (4.5 lbs) roller. The premask tape is immediately peeled off the vinyl surface at a 180° angle and a speed of 1.27 m/min (50 inches/min) using an IMASS release tester. Besides recording the peel strength, the mode of failure is carefully noted and recorded. Lifting of the test strip during peeling constitutes a failure. The adhesive is deemed to pass this test if it stays on the test panel without lifting or showing signs of forming blisters.

**Table 7**

| **ENV Room Conditions:** 4°C and 45% RH; 1.27 m/min (**50 in/min**) & 180° Peels; | | | |
|---|---|---|---|
| **Sample ID** | **NVP** | **DOA** | **Failure Mode** |
| **BASE POLYMERS** | | | |
| E | 30 | - | F |
| | | | |
| I | 12 | 0 | F |
| I | 12 | 4 | F,P |
| I | 12 | 8 | P |
| | | | |
| J | 12 | - | P |
| K | 12 | - | F |
| L | 12 | - | F |
| G | 12 | - | F |
| | | | |
| O | 10 | - | F, P |
| R | 7.9 | - | P |
| Control Adhesive | 2 | - | P |
| | | | |

| | | | |
|---|---|---|---|
| P = Pass; F = Fail; | | | |

While lowering of methyl acrylate levels (see Examples H results) and/or adding plasticizers (see I results) do afford ways of improving cold temperature properties of adhesives containing high NVP levels, another quite unexpected finding was from using appropriate adhesive blends (See Table 8 below)

**Table 8**

| **ENV Room Conditions:** 4°C and 45% RH; 1.27 m/min (**50 in/min**) & 180° Peels; | | |
|---|---|---|
| **Sample ID** | **NVP** | **Failure Mode** |
| **BLENDS** | | |
| B12 | 5.6 | P |
| B13 | 7.6 | P |
| B14 | 5.6 | P |
| B15 | 4.8 | P |

| | | |
|---|---|---|
| P = Pass; F = Fail; | | |

### LONG TERM REMOVABILITY

One other important performance property that seems to be enhanced by high NVP levels is the long term removability characteristics of these adhesives.

In the following tests, test strips (2.54 cm x 20.3 cm [1 inch x 8 inch])from the laminate samples (vinyl/adhesive/liner) were die cut and 5.1 - 7.6 cm (2-3 inches) of the adhesive exposed by peeling back the liner. This part was laminated on to 5.1cm x 12.7 cm (2 inch x 5 inch) PPG acrylic painted panels using 2 passes of a 2.04 kg (4.5 lb.) roller. The test panels along with the laminated test strips were placed in ovens at 60°C for 1-2 weeks and subsequently in a QUV chamber for 1 - 4 weeks using 8 hrs of UVB-313 irradiation - 4hrs of 100% relative humidity at 60°C cycle (Q-Panel Instruments). The samples were periodically removed and hand peeled. The performance was noted and failure mode reported as follows:
C = Cohesive failure - when adhesive splits to leave adhesive residue on both the panel as well as the vinyl facestock.
F = Face failure - when the adhesive delaminates from the film leaving all the adhesive residue on the test panel.
P = Panel failure - when the adhesive comes cleanly off the test panel leaving no residue.

Shown in the following Table 9 are results that reflect their superior performance when compared to CONTROL ADHESIVE or 3M's Controltac™ product.

**Table 9**

| **Sample ID** | **% NVP** | **Failure Mode** |
|---|---|---|
| **Base** | | |

| Polymers | | |
|---|---|---|
| 3M Controltac™ | - | 50% cohesive adhesive split |
| control | 2 | 50% cohesive adhesive split |
| F | 12 | 100% Panel |
| I | 12 | 100% Panel |
| R | 7.9 | 100% Panel |

| | | |
|---|---|---|
| ***Aging conditions : 60°C*/*6 days + QUVB-313 8hrs UV-4 hrs 100% RH at 60°C*/*10 days*** | | |

This desirable attribute is believed to be derived from the exceptional cohesive strength observed in the high NVP polymers. These properties are not compromised when using appropriate adhesive blends either as shown in the following Table 10.

**Table 10**

| **Sample ID** | **% NVP** | **Failure Mode** |
|---|---|---|
| **Blends** | | |
| B3 | 7 | 100% Panel |
| B4 | 7 | 100% Panel |
| B5 | 7 | 100% Panel |
| B12 | 5.6 | 100% Panel |
| B13 | 7.8 | 100% Panel |
| B14 | 5.6 | 100% Panel |

| | | |
|---|---|---|
| ***Aging conditions : 60°C*/*6 days + QUVB-313 8hrs UV-4 hrs 100% RH at 60°C*/*10-12 days*** | | |

Last but not the least, rivet performance is uncompromised provided appropriate adhesive blends are used as shown in the Table 11 below.

**Table 11**

| **Blend Example** | % **NVP** in (1) | **Initial Rivet (mm2)** | **Aged Rivet (mm2)** |
|---|---|---|---|
| B1 | 12 | 71 | 71 (a) |
| B3 | 12 | NA | 86 (b) |
| B4 | 12 | 55 | 81 (b) |
| B6 | 12 | NA | 76 (b) |
| B7 | 12 | NA | 76 |
| B8 | 12 | 59 | 70 (a) |
| B9 | 12 | 45 | 63 (b) |
| B10 | 30 | 51 | 68 (a) |
| B12 | 12 | 63 | 84 (a) |
| B13 | 30 | 60 | 63 (a) |
| B15 | 30 | 54 | 79 (a) |
| B16 | 30 | 61 | 87 |

All the blends described above contained GMA levels that were below 0.3% by weight.

An unexpected observation was made that CONTROL ADHESIVE blends made with adhesives with 12% by weight of NVP and 0.3% by weight of GMA performed much worse than those containing < 0.3%. This is reflected in the high values observed for aged rivet tenting (compared to those in Table 11) shown in the following Table 12.

**Table 12**

| **Blend** | **Initial Rivet (mm²)** | **Aged Rivet (mm²)** |
|---|---|---|
| B 2 | 54 | 105 (a) |
| B5 | 52 | 124 (b) |
| B17 | 62 | 101 (a) |
| B11 | 53 | 101(c) |
| B14 | 51 | 124, 96 (d) |

| | | |
|---|---|---|
| (a) Aged @ 60°C/6 days (b) Aged @ 60°C/8 days (c) Aged @ 60°C/4 days (d) Aged @ 60°C/4 days | | |

While not bound by theory, this may be resulting from crosslinking induced by NVP catalyzed reaction between acid and oxirane functionalities. It is further presently speculated that NVP accesses these sites more efficiently in the above mentioned blends.

White the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A pressure sensitive adhesive composition comprising a blend of
(1) from 5 % to 85 % by weight of a first pressure sensitive adhesive comprising (a) a major amount of at least one acrylate or methacrylate ester containing from 4 to 24 carbon atoms in the alkyl group, (b) from 8% to 30% by weight of at least one nitrogen containing monomer, (c) from 0.5% to 15% by weight of at least one unsaturated carboxylic acid, and optionally (d) at least one glycidyl monomer in an amount up to 3 % by weight as a cross-linkable monomer; and
(2) from 15 % to 95 % by weight of a second pressure sensitive adhesive comprising (a) a major amount of at least one acrylate or methacrylate ester, (b) from 0.5% to 10% by weight of at least one nitrogen containing monomer, (c) from 0.5 % to 15 % by weight of at least one unsaturated carboxylic acid, and (d) at least one glycidyl monomer as a cross-linkable monomer;
wherein the nitrogen containing monomer content of the first pressure sensitive adhesive is greater than that of the second pressure sensitive adhesive.

2. The composition according to claim 1 wherein the first adhesive has a glass transition temperature of less than 10 °C.

3. The composition according to claim 1 or 2, wherein (1)(a) is present in an amount from 55% to 90% by weight.

4. The composition according to claim 1, wherein (1)(a) is selected from 2-ethyl hexyl acrylate, isooctyl acrylate, butyl acrylate, sec-butyl acrylate, methyl butyl acrylate, 4-methyl-2-pentyl acrylate, isodecyl methacrylate, their hydroxy substituted analogs, and mixtures thereof.

5. The composition according to anyone of claims 1 to 4, wherein (1)(b) is selected from N-vinyl pyrrolidone, N-vinyl caprolactam, 1-vinyl-2-piperidone, 1-vinyl-5-methyl-2-pyrrolidone, and mixtures thereof.

6. The composition of claim 5, wherein (1)(b) is N-vinyl pyrrolidone.

7. The composition according to anyone of claims 1 to 6, wherein (1)(c) comprises acrylic acid, methacrylic acid, fumaric acid, maleic acid or anhydride, allyl acid, and mixtures of two or more thereof.

8. The composition according to anyone of claims 1 to 7, wherein (1)(d) comprises epoxy acrylate or methacrylate esters, and glycidyl allyl esters.

9. The composition according to anyone of claims 1 to 8, wherein (1)(d) is present in an amount from 0.05% to 2% by weight.

10. The composition according to anyone of claims 1 to 9, further comprising (1)(e) at least one alkyl acrylate and methacrylate ester containing less than 4 carbon atoms in the alkyl group.

11. The composition according to claim 10, wherein (1)(e) comprises methyl acrylate, ethyl acrylate, methyl methacrylate, ethyl methacrylate, and mixtures of two or more thereof.

12. The composition according to anyone of claims 1 to 11, further comprising (1)(f) at least one copolymerizable monomer.

13. The composition according to claim 12, wherein (1)(f) comprises polystyryl ethyl methacrylate, acetoacetoxy ethyl methacrylate, alpha olefin, and vinyl esters of alkanoic acids containing more than three carbon atoms.

14. The composition according to anyone of claims 1 to 13, further comprising a tackifier, plasticizer, or mixtures thereof.

15. The composition according to claim 14, wherein the plasticizer is selected from an adipate, a phosphate, a benzoate, a phthalate ester, a polyalkylene oxide, a sulfonamide, and mixtures of two or more thereof.

16. The composition according to anyone of claims 1 to 15, further comprising at least one cross linking agent.

17. The composition according to claim 16, wherein the crosslinking agent is aluminum acetylacetonate or a polyamine.

## Patentansprüche

1. Druckempfindliche Haftmittelzusammensetzung, umfassend ein Blend aus
(1) von 5 bis 85 Gew.-% eines ersten druckempfindlichen Haftmittels, umfassend (a) eine Hauptmenge von mindestens einem Acrylat- oder Methacrylatester, enthaltend von 4 bis 24 Kohlenstoffatome in der Alkylgruppe, (b) von 8 bis 30 Gew.-% von mindestens einem Stickstoff-enthaltenden Monomer, (c) von 0,5 bis 15 Gew.-% von mindestens einer ungesättigten Carbonsäure, und gegebenenfalls (d) mindestens ein Glycidylmonomer in einer Menge bis zu 3 Gew.-% als ein vernetzbares Monomer, und
(2) von 15 bis 95 Gew.-% eines zweiten druckempfindlichen Haftmittels, umfassend (a) eine Hauptmenge von mindestens einem Acrylat- oder Methacrylatester, (b) von 0,5 bis 10 Gew.-% von mindestens einem Stickstoff-enthaltenden Monomer, (c) von 0,5 bis 15 Gew.-% von mindestens einer ungesättigten Carbonsäure, und (d) mindestens ein Glycidylmonomer als ein vernetzbares Monomer,
wobei der Gehalt des Stickstoff-enthaltenden Monomers des ersten druckempfindlichen Haftmittels größer als der des zweiten druckempfindlichen Haftmittels ist.

2. Zusammensetzung nach Anspruch 1, wobei das erste Haftmittel eine Glasübergangstemperatur von weniger als 10°C aufweist.

3. Zusammensetzung nach Anspruch 1 oder 2, wobei (1)(a) in einer Menge von 55 bis 90 Gew.-% vorliegt.

4. Zusammensetzung nach Anspruch 1, wobei (1)(a) aus 2-Ethylhexylacrylat, Isooctylacrylat, Butylacrylat, sec-Butylacrylat, Methylbutylacrylat, 4-Methyl-2-pentylacrylat, Isodecylmethacrylat, deren Hydroxy-substituierten Analoga und Gemischen davon ausgewählt ist.

5. Zusammensetzung nach einem der Ansprüche 1 bis 4, wobei (1)(b) aus N-Vinylpyrrolidon, N-Vinylcaprolactam, 1-Vinyl-2-piperidon, 1-Vinyl-5-methyl-2-pyrrolidon und Gemischen davon ausgewählt ist.

6. Zusammensetzung nach Anspruch 5, wobei (1)(b) N-Vinylpyrrolidon ist.

7. Zusammensetzung nach einem der Ansprüche 1 bis 6, wobei (1)(c) Acrylsäure, Methacrylsäure, Fumarsäure, Maleinsäure oder -anhydrid, Allylsäure und Gemische aus zwei oder mehreren davon umfaßt.

8. Zusammensetzung nach einem der Ansprüche 1 bis 7, wobei (1)(d) Epoxyacrylat- oder Methacrylatester und Glycidylallylester umfaßt.

9. Zusammensetzung nach einem der Ansprüche 1 bis 8, wobei (1)(d) in einer Menge von 0,05 bis 2 Gew.-% vorliegt.

10. Zusammensetzung nach einem der Ansprüche 1 bis 9, weiter umfassend (1)(e) mindestens einen Alkylacrylat- und Methacrylatester, enthaltend weniger als vier Kohlenstoffatome in der Alkylgruppe.

11. Zusammensetzung nach Anspruch 10, wobei (1)(e) Methylacrylat, Ethylacrylat, Methylmethacrylat, Ethylmethacrylat und Gemische aus zwei oder mehreren davon umfaßt.

12. Zusammensetzung nach einem der Ansprüche 1 bis 11, weiter umfassend (1)(f) mindestens ein copolymerisierbares Monomer.

13. Zusammensetzung nach Anspruch 12, wobei (1)(f) Polystyrylethylmethacrylat, Acetoacetoxyethylmethacrylat, alpha-Olefin und Vinylester von Alkansäuren, enthaltend mehr als drei Kohlenstoffatome, umfaßt.

14. Zusammensetzung nach einem der Ansprüche 1 bis 13, weiter umfassend ein klebrigmachendes Mittel, einen Weichmacher oder Gemische davon.

15. Zusammensetzung nach Anspruch 14, wobei der Weichmacher aus einem Adipat, einem Phosphat, einem Benzoat, einem Phthalatester, einem Polyalkylenoxid, einem Sulfonamid und Gemischen aus zwei oder mehreren davon ausgewählt ist.

16. Zusammensetzung nach einem der Ansprüche 1 bis 15, weiter umfassend mindestens ein Vernetzungsmittel.

17. Zusammensetzung nach Anspruch 16, wobei das Vernetzungsmittel Aluminiumacetylacetonat oder ein Polyamin ist.

## Revendications

1. Composition adhésive auto-collante, comprenant un mélange de :
(1) de 5 % à 85 % en poids d'un premier adhésif auto-collant, comprenant (a) une quantité majeure d'au moins un ester acrylate ou méthacrylate, contenant de 4 à 24 atomes de carbone dans le radical alkyle, (b) de 8 % à 30 % en poids d'un monomère contenant de l'azote, (c) de 0,5 % à 15 % en poids d'au moins un acide carboxylique saturé, et le cas échéant, (d) au moins un monomère glycidyle en une quantité de jusqu'à 3 % en poids comme monomère réticulable, et
(2) de 15 % à 95 % en poids d'un deuxième adhésif auto-collant, comprenant (a) une quantité majeure d'au moins un ester acrylate ou méthacrylate, (b) de 0,5 % à 10 % en poids d'un monomère contenant de l'azote, (c) de 0,5 % à 15 % en poids d'au moins un acide carboxylique saturé, et (d) au moins un monomère glycidyle comme monomère réticulable,
la teneur du monomère contenant de l'azote du premier adhésif auto-collant étant supérieure à celle du deuxième adhésif auto-collant.

2. Composition selon la revendication 1, dans laquelle le premier adhésif a une température de transition vitreuse inférieure à 10°C.

3. Composition selon la revendication 1 ou 2, dans laquelle (1)(a) est présent en une quantité allant de 55 % à 90 % en poids.

4. Composition selon la revendication 1, dans laquelle (1)(a) est choisi parmi l'acrylate de 2-éthyl-hexyle, l'acrylate d'isooctyle, l'acrylate de butyle, l'acrylate de s-butyle, l'acrylate de méthylbutyle, l'acrylate de 4-méthyl-2-pentyle, le méthacrylate d'isodécyle, leurs analogues hydroxy-substitués, et leurs mélanges.

5. Composition selon l'une quelconque des revendications 1 à 4, dans laquelle (1)(b) est choisi parmi la N-vinylpyrrolidone, le N-vinylcaprolactame, la 1-vinyl-2-pipéridone, la 1-vinyl-5-méthyl-2-pyrrolidone et leurs mélanges.

6. Composition selon la revendication 5, dans laquelle (1)(b) est la N-vinylpyrrolidne.

7. Composition selon l'une quelconque des revendications 1 à 6, dans laquelle (1)(c) comprend l'acide acrylique, l'acide méthacrylique, l'acide fumarique, l'acide maléique ou son anhydride, l'acide allylique et des mélanges de deux ou plusieurs de ceux-ci.

8. Composition selon l'une quelconque des revendications 1 à 7, dans laquelle (1)(d) comprend des esters acrylate ou méthacrylate d'époxy, et des esters de glycidylallyle.

9. Composition selon l'une quelconque des revendications 1 à 8, dans laquelle (1)(d) est présent en une quantité allant de 0,05 % à 2 % en poids.

10. Composition selon l'une quelconque des revendications 1 à 9, comprenant en outre, (1)(e) au moins un ester acrylate ou méthacrylate d'alkyle, contenant moins de 4 atomes de carbone dans le groupe alkyle.

11. Composition selon la revendication 10, dans laquelle (1)(e) comprend l'acrylate de méthyle, l'acrylate d'éthyle, le méthacrylate de méthyle, le méthacrylate d'éthyle, et les mélanges de deux ou plusieurs de ceux-ci.

12. Composition selon l'une quelconque des revendications 1 à 11, comprenant en outre, (1)(f) au moins un monomère copolymérisable

13. Composition selon la revendication 12, dans laquelle (1)(f) comprend le méthacrylate de polystyryléthyle, le méthacrylate d'acétoacétoxyéthyle, une alpha-oléfine et des esters vinyliques d'acides alcanoïques contenant plus de trois atomes de carbone.

14. Composition selon l'une quelconque des revendications 1 à 13, comprenant en outre, un agent collant, un plastifiant ou leurs mélanges.

15. Composition selon la revendication 14, dans laquelle le plastifiant est choisi parmi un adipate, un phosphate, un benzoate, un phtalate, un poly(oxyde d'alkylène), un sulfonamide, ou des mélanges de deux ou plusieurs de ceux-ci.

16. Composition selon l'une quelconque des revendications 1 à 15, comprenant en outre au moins un agent de réticulation.

17. Composition selon la revendication 16, dans laquelle l'agent de réticulation est l'acétylacétonate d'aluminium ou une polyamine.
